# EUROPÄISCHE PATENTSCHRIFT

(11) **EP 3 376 430 B1**
(45) Veröffentlichungstag und Bekanntmachung des Hinweises auf die Patenterteilung: **10.03.2021**
(21) Anmeldenummer: 18153704.4
(22) Anmeldetag: 26.01.2018
(51) Int. Cl.: G06K 7/10

(54) **VERFAHREN ZUR ZUORDNUNG VON ADRESSEN BEI MODULEN EINES SYSTEMS BESTEHEND AUS WENIGSTENS ZWEI RFID-ANTENNEN SOWIE GATE-ANTENNENANORDNUNG BESTEHEND AUS WENIGSTENS ZWEI RFID-ANTENNEN**
METHOD OF ASSIGNING ADDRESSES IN MODULES OF A SYSTEM CONSISTING OF AT LEAST TWO RFID ANTENNA AND GATE ANTENNA ARRANGEMENT COMPRISED OF AT LEAST TWO RFID ANTENNA
PROCÉDÉ D'ATTRIBUTION D'ADRESSES DANS DES MODULES D'UN SYSTÈME COMPORTANT AU MOINS DEUX ANTENNES RFID AINSI QUE DISPOSITIF D'ANTENNES DE GRILLE COMPORTANT AU MOINS DEUX ANTENNES RFID

(30) Priorität: 17.03.2017 DE 102017105822
(43) Veröffentlichungstag der Anmeldung: 19.09.2018
(73) Patentinhaber: Feig Electronic GmbH, 35781 Weilburg (DE)
(72) Erfinder: Fiedler, Carsten, 35633 Lahnau (DE); Neeser, Michael, 35579 Wetzlar (DE)
(74) Vertreter: Knefel, Cordula

(56) Entgegenhaltungen:
- EP-A1- 2 846 477
- DE-A1-102013 112 599
- DE-U1-202016 104 113
- DE-U1-202016 106 117

## Beschreibung

Die Erfindung betrifft ein Verfahren zur Zuordnung von Adressen bei Modulen eines Systems bestehend aus wenigstens zwei RFID-Antennen sowie eine Gate-Antennenanordnung bestehend aus wenigstens zwei RFID-Antennen.

In der Praxis werden Gate-Antennen als Sicherungssysteme eingesetzt.

Ein RFID-Antennensystem dient einer kontaktlosen Datenübertragung, insbesondere zum Lesen und/oder Beschreiben von kontaktlosen Datenträgern, so genannten Transpondern.

Eine Gate-Antennenanordnung aus RFID-Systemen besteht aus wenigstens zwei RFID-Antennen, die wenigstens jeweils eine Antennenschleife aufweisen, die eine Induktivität darstellt und aus einer oder mehreren Windungen gebildet wird, die darüber hinaus eine Anpassschaltung aufweist, eine Schreib-/Lesestation mit integrierter Sender-/Empfänger- und Steuereinheit und einer Verbindungsleitung zwischen der Schreib-/Lesestation und der RFID-Antenne.

Die RFID-Antenne eines RFID-Systems hat folgende Aufgaben:
Einerseits die Übertragung von Energie an den Transponder und andererseits die Übertragung von Daten an und vom Transponder. Die Energie- und Datenübertragung basiert auf der magnetischen Koppelung der Wechselfelder des Readers und des Transponders im Nahbereich.

Eine Anforderung an eine RFID-Reader-Antenne ist die Energieübertragung zum Transponder. Dazu wird die Reader-Antenne ihrerseits durch einen Sender mit Energie versorgt. Um die Leistung optimal von der Endstufe des Readers in die Antenne zu übertragen, müssen Reader-Endstufe und Reader-Antenne den gleichen Eingangs- beziehungsweise Ausgangswiderstand besitzen. Eine RFID-Antenne benötigt also eine bestimmte Eingangsimpedanz, damit die Energie von der Reader-Endstufe optimal zur Antenne übertragen wird.

Ferner muss die Reader-Antenne möglichst gut auf die Betriebsfrequenz des RFID-Systems abgestimmt sein, um eine gute Koppelung und damit gute Energie- und Datenübertragung zu erreichen, wozu die Reader-Antenne in der Regel auf Resonanz mit der Betriebsfrequenz abgestimmt wird.

Ist die Resonanzfrequenz der Reader-Antenne auf die Betriebsfrequenz des RFID-Systems abgestimmt, erreicht man mit einer hohen Güte der Reader-Antenne eine hohe Energieübertragung.

Zur Anpassung des Eingangs- beziehungsweise Ausgangswiderstandes und zum Abgleich der Reader-Antenne auf die Betriebsfrequenz dient eine Anpassungsschaltung, die sich in der Regel in unmittelbarer Nähe zur Antennenschleife befindet.

Transponder bestehen aus einem integrierten Mikroelektronikbauelement (IC) und einem Resonanzkondensator und einer Antennenspule, wobei der Resonanzkondensator häufig bereits in das Mikroelektronikbauelement integriert ist. Die Antennenspule und der Resonanzkondensator bilden einen elektrischen Schwingkreis und werden auf ihre Betriebsfrequenz von zum Beispiel 13,56 MHz abgestimmt.

Gelangt ein Transponder in den Erfassungsbereich der Reader-Antenne, so erhält der Transponder über die magnetische Koppelung mit der Antenne Energie zum Betrieb der integrierten Schaltung (IC). Der Betrag der Energie ist abhängig von der Feldstärke beziehungsweise Anzahl der Feldlinien, die den Transponder durchdringen und den Winkel der Feldlinien zum Transponder. Die maximale Energie erhält der Transponder bei einem Winkel zwischen Feldlinien und Transponder von 90°. Ist der Winkel zwischen Feldlinien und Transponder sehr spitz oder sogar 0°, so wird der Transponder von keinen Feldlinien durchdrungen und erhält somit auch keine Energie. Ist die Energie groß genug, wird das IC in den Grundzustand versetzt und beginnt zu arbeiten.

Der Bereich, in dem der Transponder ausreichend mit Energie versorgt wird und mit dem RFID-System kommunizieren kann, wird Erfassungsbereich genannt. Derartige RFID-Systeme sind aus der DE 10 2004 035 621 A1 bekannt.

Aus der Praxis sind Gate-Antennen bekannt, die beispielsweise häufig im Ausgangsbereich von Kaufhäusern, Bibliotheken oder anderen öffentlich zugänglichen Gebäuden oder Bereichen angeordnet sind, um mit Warensicherungsetiketten oder Transpondern gesicherte Waren oder Bücher zu erfassen, falls diese unbefugt aus dem Kaufhaus, der Bibliothek oder dergleichen heraustransportiert werden sollen.

Eine Gate-Antenne stellt eine spezielle Bauform einer Antenne dar, die primär für die freie Aufstellung in Räumen ausgelegt ist und dazu dient, mit Transpondern zu kommunizieren, die von einer Person durch die Gate-Antenne transportiert werden.

Gate-Antennen finden in vielfältiger Weise auch in anderen Einsatzgebieten Anwendung.

Ein Beispiel ist die Ausleihe in Bibliotheken. Die Bibliotheken statten die Bücher ebenfalls mit Transpondern aus. Die Gate-Antennen stehen beispielsweise an Ein- und Ausgängen, Treppenaufgängen, Übergängen und dergleichen mehr. Durch dieses System sind Besucher beispielsweise in der Lage, Bücher selbst auszubuchen, wodurch sich Wartezeiten erheblich verkürzen. Weiterhin ist die Rückgabe von Büehern außerhalb der Öffnungszeiten möglich und Personal wird entlastet.

Gate-Antennen sind ein variables System. Je nach Anforderung des Kunden können Gate-Antennenanordnungen aufgestellt werden, die aus mehreren Antennen bestehen, derart, dass eine Vielzahl von Durchgängen zwischen den Gate-Antennen möglich ist, um eine möglichst hohe Personenzahl zügig durch die Gate-Antennenanordnung gehen zu lassen und dabei durch die Gate-Antennenanordnung transportierte Waren zu erfassen.

Der Kunde, beispielsweise ein Kaufhaus oder eine Bibliothek kann ein Gate (Durchgang) oder mehrere Gates nebeneinander aufbauen.

Diese Gates müssen synchronisiert werden.

Üblicherweise weist eine Gate-Antennenanordnung eine so genannte Master-Antenne und eine Mehrzahl von so genannten Slave-Antennen auf.

Die Master-Antenne enthält einen Reader und somit eine Steuereinheit. Üblicherweise ist auch ein Multiplexer vorgesehen.

Die Slave-Antennen enthalten die Antenne und weitere Module, wie beispielsweise LED-Module, Module zur Personenzählung und/oder Displays.

Im Auslieferungszustand sind sämtlichen Slave-Antennen identisch. Dies hat den Vorteil, dass der Hersteller der Antennen lediglich zwei unterschiedliche Antennenformen herstellen und bevorraten muss, nämliche die Master-Antenne und die Slave-Antenne.

Sind mehrere Slave-Antennen in einer Gate-Antennenanordnung vorgesehen, müssen diese vor Ort konfiguriert werden. Hierzu müssen bei der Installation die Slave-Antennen an den korrekten Port (Anschluss) des Multiplexers angeschlossen werden und die in den Slave-Antennen angeordneten Module müssen korrekt, beispielsweise mittels eines Jumpers, das heißt, einer Kurzschlussbrücke eingestellt werden. Hierbei werden in der Praxis häufig falsche Konfigurationen durchgeführt, so dass eine aufwendige Fehlersuche und Neu-Konfiguration des Systems durchgeführt werden muss.

Zum Stand der Technik (DE 10 2013 112 599 A1) gehört eine RFID-Antennenordnung mit wenigstens einer RFID-Antenne sowie ein Verfahren zur Bestimmung eines Abstandes von wenigstens zwei Leiterschleifen einer RFID-Antenne einer RFID-Antennenanordnung. Diese zum Stand der Technik gehörende RFID-Antennenanordnung kann dahingehend weiter verbessert werden, dass bei Anordnung einer Master-Antenne und wenigstens einer Slave-Antenne diese nicht mehr vor Ort konfiguriert werden müssen bei der Installation der Antennenanordnung.

Das der Erfindung zugrunde liegende technische Problem besteht darin, ein Verfahren zur Zuordnung von Adressen bei Modulen eines Systemes bestehend aus wenigstens zwei RFID-Antennen anzugeben sowie eine Gate-Antennenanordnung bestehend aus wenigstens zwei RFID-Antennen, mit denen eine automatische Konfiguration und damit eine fehlerfreie Konfiguration durchgeführt werden kann.

Dieses Problem wird durch ein Verfahren mit den Merkmalen gemäß Anspruch 1 sowie eine Gate-Antennenanordnung mit den Merkmalen gemäß Anspruch 10 gelöst.

Das erfindungsgemäße Verfahren zur Zuordnung von Adressen bei Modulen eines Systems bestehend aus wenigstens zwei RFID-Antennen, wobei die Antennen wenigstens jeweils eine Antennenschleife aufweisen, die eine Induktivität darstellt und aus einer oder mehreren Windungen gebildet wird, die darüber hinaus eine Anpassschaltung aufweist, wobei eine Master-Antenne und wenigstens eine Slave-Antenne das System bilden, wobei in jeder Antenne wenigstens ein adressierbares Modul angeordnet ist, derart, dass das System insgesamt wenigstens zwei Module aufweist, wobei jedes Modul einen RF-Detektor aufweist, wobei die Master-Antenne einen RFID-Reader und wenigstens einen Multiplexer aufweist, und wobei über den Multiplexer nach und nach die Antennen angesprochen werden, zeichnet sich dadurch aus,
a) dass vom Reader eine der Antennen angesteuert wird, so dass ein Feld der Antenne eingeschaltet wird,
b) dass eine Nachricht mit Angabe der zu übernehmenden Adresse über eine Datenleitung an sämtliche adressierbaren Module gesendet wird,
c) dass mit den RF-Detektoren sämtlicher adressierbaren Module die Spannung gemessen wird,
d) dass die Adresse in dem zu adressierenden Modul gespeichert wird, welches eine über einer vorgegebenen Schwelle liegende Spannung erfasst,
e) dass die Schritte a) bis d) für jede Antenne wiederholt werden.

Ein weitergebildetes Verfahren zur Zuordnung von Adressen bei Modulen eines Systems bestehend aus wenigstens zwei RFID-Antennen, wobei eine Master-Antenne und wenigstens eine Slave-Antenne das System bilden, wobei in jeder Antenne wenigstens ein adressierbares Modul angeordnet ist, derart, dass das System insgesamt wenigstens zwei Module aufweist, wobei jedes Modul einen RF-Detektor aufweist, wobei die Master-Antenne einen RFID-Reader und wenigstens einen Multiplexer aufweist, zeichnet sich dadurch aus,
a) dass vom Reader eine der Antennen angesteuert wird, so dass ein Feld dieser Antenne eingeschaltet wird,
b) dass eine Nachricht vom Reader mit Angabe der zu übernehmenden Adresse über eine Datenleitung an alle Slave-Antennen gesendet wird,
c) dass die zu adressierenden Module die von der Antenne erzeugte Spannung mit den RF-Detektoren messen und diesen Spannungswert zu der gesendeten Adresse speichern,
d) dass die Schritte a) bis c) für jede Antenne wiederholt werden,
e) dass eine Nachricht an sämtliche Antennen gesendet wird, so dass jedes adressierbare Modul die Adresse übernimmt, die jeweils der größten am RF-Detektor dieses Modules gemessenen Spannung zugeordnet wurde.

Die erfindungsgemäße Gate-Antennenanordnung bestehend aus wenigstens zwei RFID-Antennen, wobei jede RFID-Antenne wenigstens ein Modul aufweist, derart, dass das System insgesamt wenigstens zwei Module aufweist, wobei eine Antenne als Master-Antenne und wenigstens eine Antenne als Slave-Antenne ausgebildet ist, wobei die Master-Antenne einen RFID-Reader und wenigstens einen Multiplexer aufweist, zeichnet sich dadurch aus, dass in jeder Slave-Antenne wenigstens ein adressierbares Modul angeordnet ist und dass jedes adressierbare Modul einen RF-Detektor aufweist.

Die erfindungsgemäßen Verfahren weisen den Vorteil auf, dass jedes zu adressierende Modul automatisch den richtigen Antennen zugeordnet wird. Die Zuordnung muss, wie schon ausgeführt, korrekt für die Funktion sein, das heißt, es muss eine eindeutige und korrekte Zuordnung zwischen der Antenne und den einzelnen Modulen vorliegen.

Ein weiterer Vorteil der Erfindung besteht darin, dass eine einfache Montage und Konfiguration erfolgen kann, bei der Fehler, die bei der Installation durch eine falsche Adressvergabe entstehen können, vermieden werden.

Die Inbetriebnahme wird sehr stark vereinfacht. Bei der Konfiguration wird lediglich die Anzahl der Antennen angegeben und die Konfiguration erfolgt automatisch.

Der besondere Vorteil des erfindungsgemäßen Verfahrens liegt darin, dass ein RF-Detektor, der an der Gate-Antenne angeordnet ist, das Feld erkennt und hierdurch jedem adressierbaren Modul von der Master-Antenne eine feste Adresse zugewiesen werden kann.

Der RF-Detektor ist vorteilhaft so platziert und konfiguriert, dass er nur reagiert, wenn auf der ihm zugeordneten Antenne das Feld aktiv ist.

Die Master-Antenne weist einen RFID-Reader (RFID - englisch für "radio frequency identification") auf. Mit dem RFID-Reader kann eine Identifizierung mit elektromagnetischen Wellen erfolgen.

Typische Frequenzen liegen beispielsweise zwischen 890 MHz und 960 MHz.

Eine typische Frequenz für RFID-Systeme liegt auch bei 13,56 MHz.

Die RF-Detektoren (radio frequency Detektoren) erfassen die von den Antennen, insbesondere den Slave-Antennen abgestrahlten Felder und messen eine Spannung. Da gemäß der Erfindung jedes adressierbare Modul einen RF-Detektor aufweist, erfasst jedes Modul über den RF-Detektor die von den Antennen der Gate-Antennenanordnung nacheinander erzeugten Felder. Hierüber kann eine Zuordnung der Module zu der Antenne, an der die Module angeordnet sind, automatisch erfolgen.

Die Gate-Antennen der Gate-Antennenanordnung werden von dem Reader der Master-Antenne automatisch konfiguriert. Die Adressvergabe der Module erfolgt über eine Software im Reader. Der Reader der Master-Antenne managt alle anderen Antennen.

Gemäß dem ersten erfindungsgemäßen Verfahren erfolgt der Ablauf der Konfiguration folgendermaßen:
- Der Multiplexer wird auf einen ersten Kanal gesetzt und das Feld einer ersten Slave-Antenne wird eingeschaltet.
- Eine Nachricht (Broadcast) mit Angabe der zu übernehmenden Adresse wird über eine Datenleitung (Bus) gesendet.
- Die Busteilnehmer, die Module, messen daraufhin die Spannung, die an ihren jeweiligen RF-Detektoren anliegt. Liegt diese Spannung über einem bestimmten Schwellwert, so wird die im Befehl übergebene Busadresse gespeichert und eine Nachricht und/oder die Firmware-Version des Modules wird an die Master-Antenne zurückgesendet.
   Anschließend wird der Multiplexer durch den Reader auf den nächsten Kanal gesetzt und ein Broadcast mit der nächsten Busadresse wird gesendet.
- Dieses wird für jede vorhandene Antenne wiederholt. Erhält der Reader auf alle Broadcast-Befehle eine Antwort, erkennt der Reader, dass sämtliche Module eine Adresse übernommen haben.

Sind mehrere Module in derselben Antenne eingebaut, so wird anhand der Zehnerstelle der Busadresse das Modul festgelegt. Das bedeutet, dass verschiedene Module, die in ein und derselben Antenne angeordnet sind, unterschiedliche Adressbereiche erhalten.

So kann beispielsweise ein Personenzähler den Adressbereich 1 - 9 erhalten und eine LED den Adressbereich 11 - 19.

Gemäß einer vorteilhaften Ausführungsform der Erfindung sendet ein zu adressierendes Modul eine Nachricht an die Master-Antenne zurück, wenn eine Adresse in diesem Modul gespeichert wurde. Hierdurch kann die Master-Antenne erkennen, wenn sämtliche Module eine Adresse abgespeichert haben.

Gemäß einer weiteren vorteilhaften Ausführungsform der Erfindung ist vorgesehen, dass die Konfiguration beendet wird, wenn die Master-Antenne auf jede gesendete Nachricht eine Nachricht von einer Slave-Antenne und/oder eine Nachricht von einem Modul empfangen hat.

Hierdurch ist gewährleistet, dass die Konfiguration erst beendet wird, wenn zumindest jedem Modul eine Adresse zugeordnet wurde.

Die zweite Variante des erfindungsgemäßen Verfahrens dient dazu, unabhängig von der Höhe der erzeugten Spannung im RF-Detektor zu sein:
- Der Multiplexer wird auf einen ersten Kanal gesetzt und das Feld einer ersten Slave-Antenne wird eingeschaltet.
- Eine Nachricht (Broadcast) mit der Angabe der zu übernehmenden Adresse wird über die Datenleitung (Bus) gesendet.
- Die Module messen daraufhin die erzeugte Spannung am RF-Detektor und speichern diese Spannung zu der zugehörigen übergebenden Bus-Adresse. Es wird in diesem Fall keine Antwort an den Reader der Master-Antenne gesendet.
- Anschließend wird der Multiplexer durch den Reader auf den nächsten Kanal gesetzt und eine Nachricht (Broadcast) mit der nächsten Bus-Adresse wird gesendet.
- Dies wird für jede vorhandene Antenne wiederholt.
- Wurde auf jeder Antenne ein Broadcast gesendet, wird anschließend ein Broadcast gesendet, der die Module (Busteilnehmer) auffordert, die Bus-Adresse zu übernehmen, bei der die größte Spannung am RF-Detektor gemessen wurde.
- Um festzustellen, ob alle Module eine korrekte Bus-Adresse haben, wird vorteilhaft anschließend jedes Modul mit seiner Adresse angesprochen.

Das heißt, dass gemäß einer vorteilhaften Ausführungsform der Erfindung jedes adressierbare Modul nach dem Konfigurieren mit seiner Adresse von der Master-Antenne angesprochen wird.

Gemäß einer weiteren vorteilhaften Ausführungsform erhält bei wenigstens zwei unterschiedlichen Modulen in einer Slave-Antenne jedes Modul eine andere Adresse oder eine andere Kennung im Adressbereich.

Dies ist erforderlich, da beispielsweise unterschiedliche Module, wie beispielsweise eine LED oder ein Personenzähler in ein und derselben Slave-Antenne angeordnet sind. Die RF-Detektoren der LED und des Personenzählers erfassen das Feld der Antenne, wenn diese von dem Reader eingeschaltet wird. Die in den RF-Detektoren des Personenzählers und der LED, die in einer gemeinsamen Antenne angeordnet sind, gemessenen Spannungen unterscheiden sich nicht oder nur geringfügig. Damit den unterschiedlichen Modulen unterschiedliche Adressbereiche zugewiesen werden, akzeptiert der Personenzähler nur Adressen, deren Zehnerstelle 0 ist (1-9), und die LED nur Adressen, wenn die Zehnerstelle 1 ist (11-19). Auf diese Art und Weise werden Module unterschiedlicher Bauart in ein und derselben Antenne durch den Reader unterschieden.

Gemäß einer besonders bevorzugten Ausführungsform der Erfindung ist die Adresse als Bus-Adresse ausgebildet.

Eine weitere vorteilhafte Ausführungsform der Erfindung sieht vor, dass sämtliche Slave-Antennen und/oder adressierbaren Module über eine Busleitung miteinander verbunden sind.

Vorteilhaft können als Module LEDs (light emitting diode) und/oder Personenzähler und/oder Displays verwendet werden.

Die erfindungsgemäße Gate-Antennenanordnung weist den Vorteil auf, dass dadurch, dass in jeder Slave-Antenne wenigstens ein adressierbares Modul angeordnet ist und dass jedes adressierbare Modul einen RF-Detektor aufweist, die Konfiguration der Gate-Antennenanordnung automatisch erfolgen kann, da jeder RF-Detektor erkennt, wenn die Antenne, an der das Modul des RF-Detektors angeordnet ist, ein Feld abstrahlt. Hierdurch kann eine Zuordnung der Module zu der jeweiligen Antenne erfolgen.

Gemäß einer vorteilhaften Ausführungsform der erfindungsgemäßen Gate-Antennenanordnung ist das adressierbare Modul als LED (light emitting diode) oder Personenzähler oder Display ausgebildet.

Eine weitere vorteilhafte Ausführungsform der Gate-Antennenanordnung sieht vor, dass eine Datenübertragungsleitung zwischen sämtlichen Modulen der Slave-Antennen und dem Reader der Master-Antenne vorgesehen ist.

Gemäß einer weiteren vorteilhaften Ausführungsform der Erfindung weist der Personenzähler wenigstens ein Radarmodul auf.

Ist die Slave-Antenne, in der der Personenzähler angeordnet ist, zwischen zwei Durchgängen angeordnet, weist die Antenne vorteilhaft zwei Radarmodule auf, die zu beiden Seiten Personen erfassen.

Weitere Merkmale und Vorteile der Erfindung ergeben sich anhand der zugehörigen Zeichnungen, in denen Ablaufdiagramme der Verfahren und Gate-Antennenanordnungen nur beispielhaft dargestellt sind, ohne die Erfindung auf diese Ausführungsbeispiele zu beschränken. In den Zeichnungen zeigen:
- Fig. 1: eine Gate-Antennenanordnung;
- Fig. 2: eine Antenne mit Anschluss an einen Bus;
- Fig. 3: eine Gate-Antennenanordnung während der Konfiguration;
- Fig. 4: ein Ablaufdiagramm für ein erstes Konfigurationsverfahren;
- Fig. 5: ein Ablaufdiagramm für ein zweites Konfigurationsverfahren.

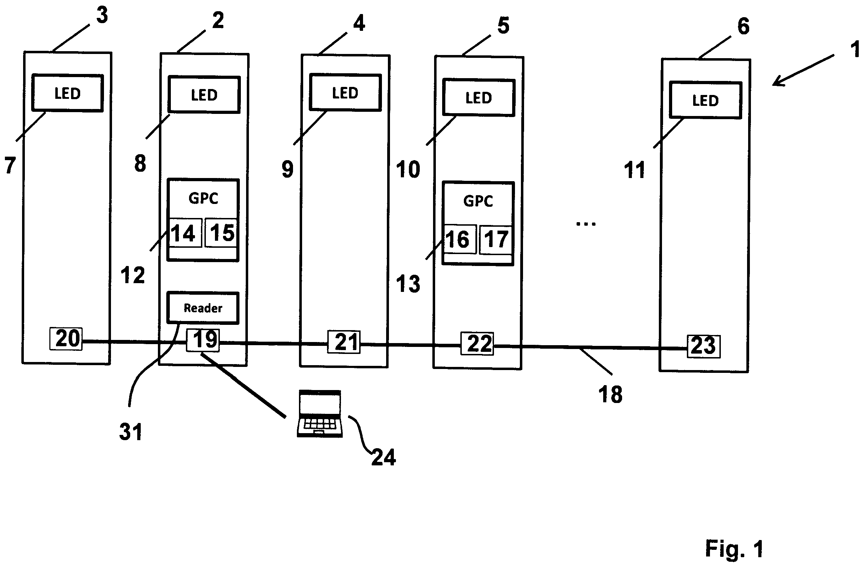

Fig. 1 zeigt eine Gate-Antennenanordnung 1 mit einer Master-Antenne 2 und Slave-Antennen 3, 4, 5, 6. Es können noch mehr Slave-Antennen angeschlossen sein. Das Vorsehen noch weiterer Antennen zwischen den Antennen 5 und 6 ist durch Punkte angedeutet. Die Beschreibung erfolgt nur für die Antennen 2 bis 6, ohne Beschränkung auf dieses Anzahl.

Die Antennen 2 bis 6 weisen adressierbare Module 7, 8, 9, 10, 11 mit jeweils einer LED (in Fig. 1 nicht dargestellt) auf. Die Antennen 2 und 5 weisen zusätzlich Module 12, 13 auf, die als Personenzähler (GPC [gate people counter]) ausgebildet sind.

Die Module 12, 13 weisen jeweils zwei Radarmodule 14, 15; 16, 17 auf. Das Radarmodul 14 deckt den Bereich zwischen den Antennen 2 und 3 ab, das Radarmodul 15 den Bereich zwischen den Antennen 2 und 4, das Radarmodul 16 den Bereich zwischen den Antennen 4 und 5 und das Radarmodul 17 zwischen den Antennen 5 und 6 oder einer weiteren dazwischen angeordneten Antenne.

Die Antennen 2, 3, 4, 5, 6 sind über eine Busleitung 18 miteinander verbunden. In den Antennen 2 bis 6 sind Steuerungen 20 bis 23 angeordnet, die wiederum in Verbindung mit den Modulen 7, 8, 9, 10, 11, 12, 13 stehen.

Die Master-Antenne 2 ist darüber hinaus mit einem PC (personal computer) 24 verbunden.

Den Modulen 7, 8, 9, 10, 11, 12, 13 sollen Adressen zugeordnet werden.

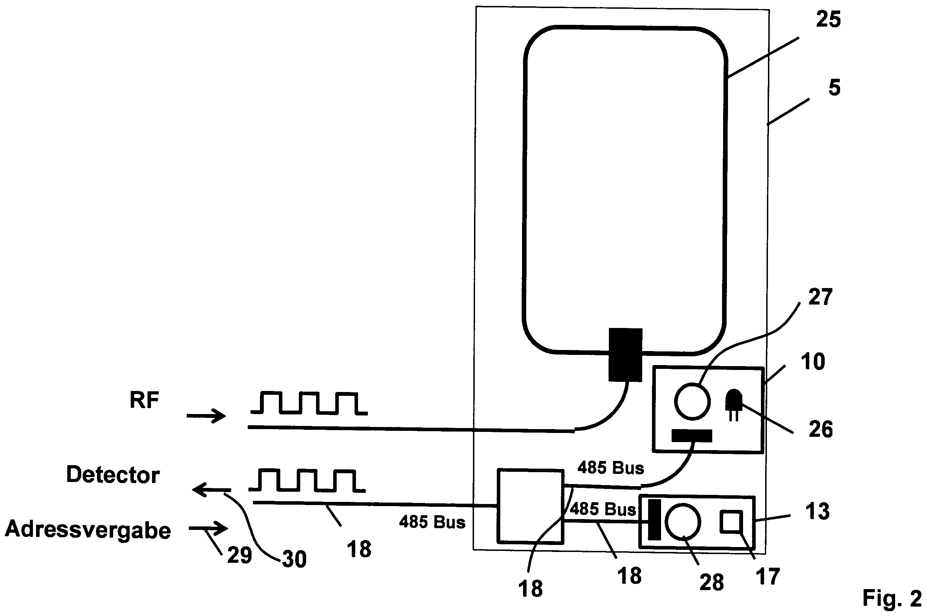

Hierzu ist in Fig. 2 beispielhaft Antenne 5 dargestellt. Die Antenne 5 weist eine Antennenschleife 25 auf, die in einem RF-Bereich (radio frequency Bereich) betrieben wird. In der Antenne 5 ist das Modul 10 angeordnet, welches eine LED 26 aufweist. Darüber hinaus ist das Modul 13 in der Antenne 5 angeordnet, welches ein Radar-Modul 17 aufweist. In den Modulen 10, 13 ist darüber hinaus jeweils ein RF-Detektor 27, 28 angeordnet.

Die beiden RF-Detektoren 27, 28 erfassen ein von der Antennenschleife 25 erzeugtes Feld und messen eine Spannung. Die Konfiguration und Adressvergabe kann nun folgendermaßen ablaufen:
Von dem Reader 31 der Antenne 2 (Fig. 1) wird ein Signal an die Antennenschleife 25 gesandt, so dass die Antennenschleife 25 ein Feld erzeugt. Dieses Feld wird von dem RF-Detektor 27 und dem RF-Detektor 28 erfasst. Gleichzeitig wird eine Nachricht (29) an die Antenne 5 mit Angabe der zu übernehmenden Adresse geschickt. Mit den RF-Detektoren (27, 28) und auch den RF-Detektoren der anderen in Fig. 1 dargestellten Antennen wird die Spannung gemessen.

Die RF-Detektoren 27, 28 erfassen einen Spannungswert, der über einer angegebenen Schwelle liegt, da diese RF-Detektoren in unmittelbarer Nähe der Antennenschleife 25 angeordnet sind. Die Adresse 29 wird in den Modulen 10, 13 gespeichert.

Anschließend wird von dem Reader 31 eine weitere Antenne 3, 4, 6 angesteuert und auf die gleiche Art und Weise eine Adresse an die adressierbaren Module geschickt.

Anschließend schicken die Module 10, 13 eine Nachricht 30 an den Reader 31, dass eine Adresse in den jeweiligen Modulen gespeichert ist. Der RFID-Reader 31 kann nun die Module 10, 13 der Antenne 5 zuordnen.

Gemäß einem zweiten Verfahren wird von der Master-Antenne 2, das heißt dem Reader 31, die Antenne 5 angesteuert, so dass die Antennenschleife 25 ein Feld erzeugt. Es wird vom Reader 31 eine Nachricht 29 mit Angabe der zu übernehmenden Adresse an alle Slave-Antennen gesendet. Die zu adressierenden Module 7, 8, 9, 10, 11, 12, 13 speichern die von der Slave-Antenne 5 erzeugte Spannung, die mit dem RF-Detektoren 27, 28 gemessen wurden. Dieser Spannungswert wird zu der gesendeten Adresse gespeichert. Der RFID-Reader 31 spricht nacheinander die Antennen 3, 4, 6 an und die Schritte werden wiederholt.

Anschließend wird eine Nachricht an sämtliche Slave-Antennen 3, 4, 5, 6 gesendet, so dass jedes adressierbare Modul 7, 8, 9, 10, 11, 12, 13 die Adresse übernimmt, die jeweils der größten am RF-Detektor 27, 28 dieses Modules 7, 8, 9, 10, 11, 12, 13 gemessenen Spannung zugeordnet wurde.

Wird die Antennenschleife 25 von dem Reader 31 angesteuert, so dass ein Feld von dieser Antennenschleife 25 erzeugt wird, erfassen die RF-Detektoren 27, 28 den größten Spannungswert im Vergleich zu den anderen Antennen 3, 4, 6, die mit einem größeren Abstand zu der Antenne 5 angeordnet sind. Nach Erhalt der entsprechenden Nachricht von dem Reader 31 erkennt die Antenne 5, dass die größte Spannung bei Ansprechen der Antennenschleife 25 vorlag und ordnet die Adresse den Modulen 10 und 13 zu.

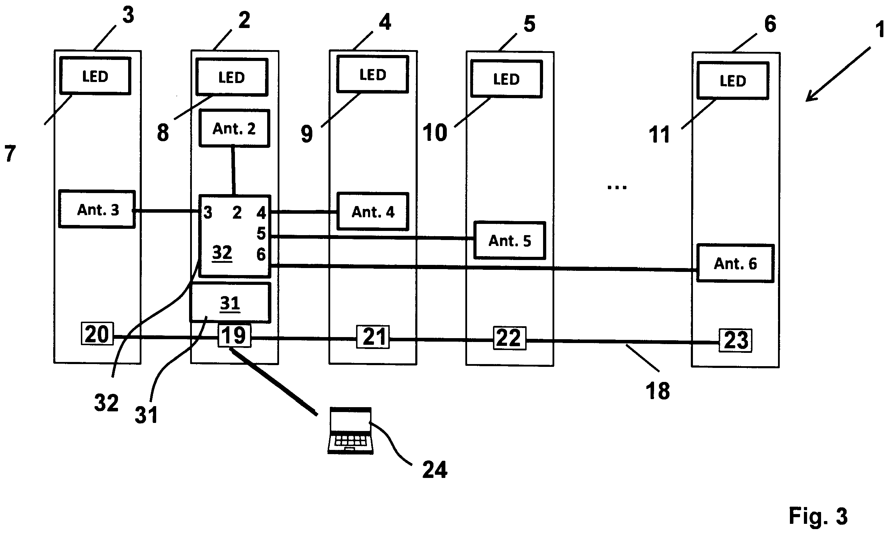

In Fig. 3 ist die Gate-Antennenanordnung 1 gezeigt. In der Master-Antenne 2 ist der Multiplexer 32 angeordnet. Über den Multiplexer werden nach und nach die Antennen 2, 3, 4, 5, 6 angesprochen wie beschrieben.

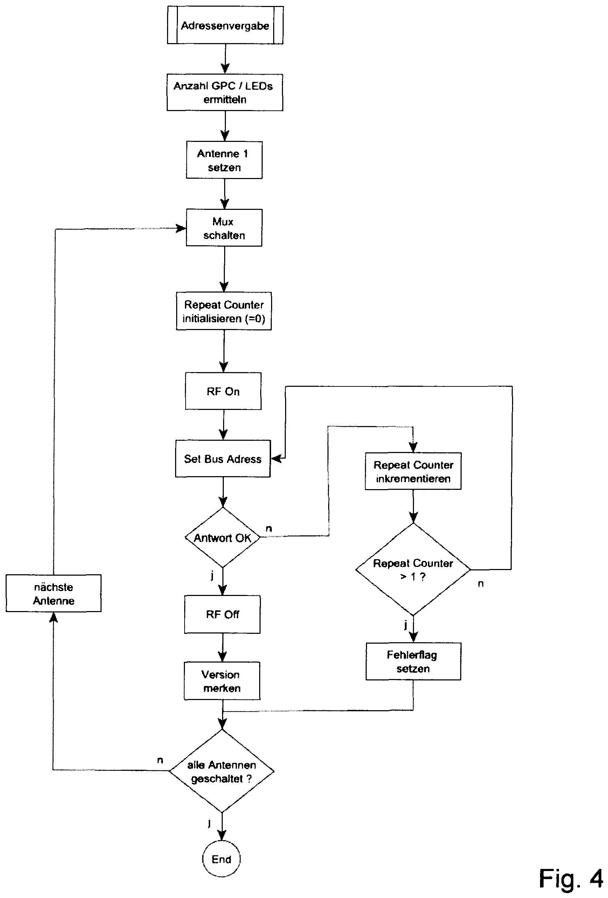

Fig. 4 zeigt ein Ablaufdiagramm des ersten Verfahrens, die Adressvergabe der am RS485-Bus 18 angeschlossenen Module 7, 8, 9, 10, 11, 12, 13 erfolgt durch den Reader 31 (Master), je nach Konfiguration nach einem System-Reset oder einem externen Befehl.

Anhand der Konfiguration erkennt der Reader 31, wie viele Antennen 3, 4, 5, 6 angeschlossen sind und welche Geräte 7, 8, 9, 10, 11, 12, 13 in den Antennen 3, 4, 5, 6 eingebaut sind.

Der Ablauf erfolgt folgendermaßen:
- Der Multiplexer 32 wird auf Kanal 1 gesetzt und das Feld der Antenne 2 wird eingeschaltet. Ein Broadcast (Nachricht) 29 mit Angabe der zu übernehmenden Adresse wird über den Bus 18 gesendet. Die Busteilnehmer, das heißt die Module 7, 8, 9, 10, 11, 12, 13 messen daraufhin die Spannung am RF-Detektor 27, 28. Liegt dieser über einer bestimmten Schwelle, so wird die im Befehl übergebene Busadresse gespeichert und eine positive Meldung und die Firmwareversion des Gerätes an den Reader 31. Sind mehrere Geräte 10, 13 in der gleichen Antenne 5 eingebaut, so wird mit der Zehnerstelle das Gerät festgelegt, zum Beispiel 1 bis 9 für GPC 13 (gate people counter) und 11 bis 19 für LED-Module 7, 8, 9, 10, 11.
   Anschließend wird der Multiplexer 32 durch den Reader 31 auf den nächsten Kanal gesetzt und eine Nachricht 29 mit der nächsten Busadresse gesendet. Dies wird für jede vorhandene Antenne 3, 4, 5, 6 wiederholt. Erhält der Reader 31 auf alle Befehle eine Antwort, erkennt dieser, dass alle Geräte 7, 8, 9, 10, 11, 12, 13 eine Adresse übernommen haben.

Um unabhängig von der Höhe der erzeugten Spannung des RF-Detektors 27, 28 zu sein, wird der Ablauf geändert.

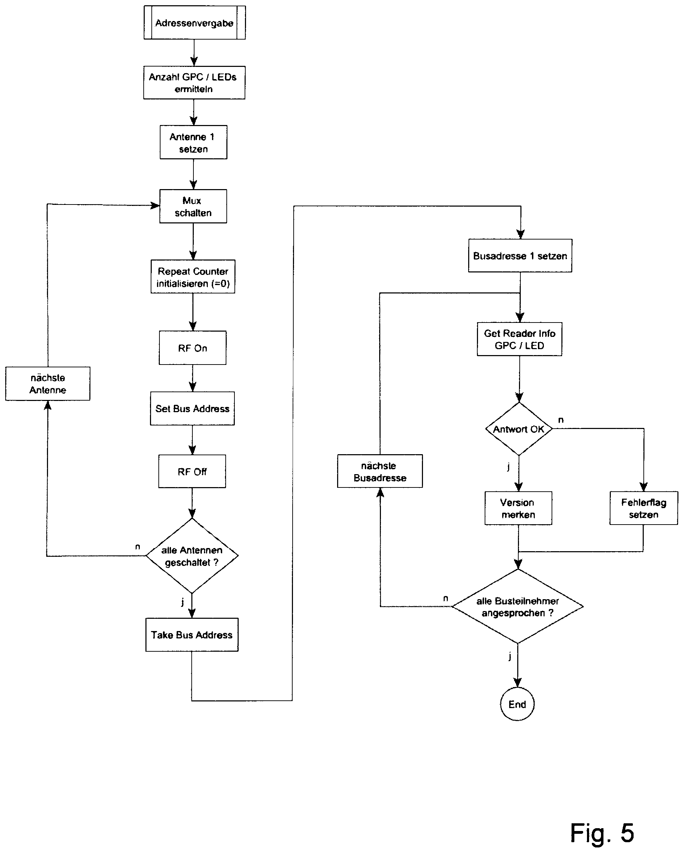

Die zweite Variante des Verfahrens ist in Fig. 5 dargestellt.
- Der Multiplexer 32 wird auf Kanal 1 gesetzt und das Feld der Antennenschleife 25 eingeschaltet.
- Eine Nachricht 29 mit Angabe der zu übernehmenden Adresse wird über den Bus 18 gesendet.
- Die Busteilnehmer 8, 12 (Module) messen daraufhin die Spannung an dem RF-Detektor 27, 28 und merken sich diese Spannung und die zugehörige übergebene Busadresse. Es wird in diesem Fall keine Antwort an den Reader 31 gesendet.
- Anschließend wird der Multiplexer 32 durch den Reader 31 auf den nächsten Kanal gesetzt und eine Nachricht 29 mit der nächsten Busadresse gesendet.
- Dies wird für jede vorhandene Antenne 3, 4, 5, 6 wiederholt.
- Wurde auf jeder Antenne 2, 3, 4, 5, 6 eine Nachricht 29 gesendet, wird nun eine Nachricht gesendet, die die Busteilnehmer (Module 7, 8, 9, 10, 11, 12, 13) auffordert, die Busadresse zu übernehmen, bei der die größte Spannung am RF-Detektor 27, 28 gemessen wurde. Es wird in diesem Fall keine Antwort an den Reader 31 gesendet.
   Um festzustellen, ob alle Geräte 7, 8, 9, 10, 11, 12 eine korrekte Busadresse haben, wird anschließend jedes Gerät 7, 8, 9, 10, 11, 12 mit seiner Adresse angesprochen.

Geht eine Person zwischen zwei Gate-Antennen 2, 3; 2, 4; 4, 5; 5, 6 durch, beispielsweise unerlaubterweise mit Ware oder einem Buch, wird ein Alarm gegeben, indem eine LED der Module 7, 8, 9, 10, 11 aufleuchtet. Durch die Zuordnung der Module 7, 8, 9, 10, 11 zu den Antennen 3, 4, 5, 6 ist sofort erkennbar, in welchem Gate der unerlaubte Transport stattgefunden hat.

Über die Personenzähler kann die Anzahl der Personen, die die Gate-Antennenanordnung 1 passieren, erfasst werden.

Zusätzlich können in den Antennen 2, 3, 4, 5, 6 Displays und akustische Signalgeber vorhanden sein.

### Bezugszahlen

- 1: Gate-Antennenanordnung
- 2: Master-Antenne
- 3: Slave-Antenne
- 4: Slave-Antenne
- 5: Slave-Antenne
- 6: Slave-Antenne
- 7: Modul LED
- 8: Modul LED
- 9: Modul LED
- 10: Modul LED
- 11: Modul LED
- 12: Modul GPC
- 13: Modul GPC
- 14: Radarmodul
- 15: Radarmodul
- 16: Radarmodul
- 17: Radarmodul
- 18: Busleitung
- 19: Steuerung
- 20: Steuerung
- 21: Steuerung
- 22: Steuerung
- 23: Steuerung
- 24: PC Personal Computer
- 25: Antennenschleife
- 26: LED
- 27: RF-Detektor
- 28: RF-Detektor
- 29: Adresse/Nachricht
- 30: Adresse/Nachricht
- 31: Reader
- 32: Multiplexer

## Patentansprüche

1. Verfahren zur Zuordnung von Adressen bei Modulen eines Systems bestehend aus wenigstens zwei RFID-Antennen, wobei eine Master-Antenne und wenigstens eine Slave-Antenne das System bilden, wobei die Antennen wenigstens jeweils eine Antennenschleife aufweisen, die eine Induktivität darstellt und aus einer oder mehreren Windungen gebildet wird, die darüber hinaus eine Anpassschaltung aufweist, wobei in jeder Antenne wenigstens ein adressierbares Modul angeordnet ist, derart, dass das System insgesamt wenigstens zwei Module aufweist, wobei jedes Modul einen RF-Detektor aufweist, wobei die Master-Antenne einen RFID-Reader und wenigstens einen Multiplexer aufweist, und wobei über den Multiplexer nach und nach die Antennen (2, 3, 4, 5, 6) angesprochen werden,
**dadurch gekennzeichnet*,***
a) **dass** vom Reader (31) eine der Antennen (2, 3, 4, 5, 6) angesteuert wird, so dass ein Feld der Antenne (2, 3, 4, 5, 6) eingeschaltet wird,
b) **dass** eine Nachricht (29) mit Angabe der zu übernehmenden Adresse über eine Datenleitung (18) an sämtliche adressierbaren Module (7, 8, 9, 10, 11, 12, 13) gesendet wird,
c) **dass** mit den RF-Detektoren (27, 28) sämtlicher adressierbaren Module (7, 8, 9, 10, 11, 12, 13) eine Spannung gemessen wird,
d) **dass** die Adresse in dem zu adressierenden Modul (7, 8, 9, 10, 11, 12, 13) gespeichert wird, welches eine über einer vorgegebenen Schwelle liegende Spannung erfasst,
e) **dass** die Schritte a) bis d) für jede Antenne (2, 3, 4, 5, 6) wiederholt werden.

2. Verfahren nach Anspruch 1, **dadurch gekennzeichnet, dass** ein zu adressierendes Modul (7, 8, 9, 10, 11, 12, 13) eine Nachricht (30) an den Reader (31) zurücksendet, wenn eine Adresse in diesem Modul (7, 8, 9, 10, 11, 12, 13) gespeichert wurde.

3. Verfahren nach Anspruch 2, **dadurch gekennzeichnet, dass** die Konfiguration beendet wird, wenn der Reader (31) auf jede gesendete Nachricht (29) eine Nachricht (30) von einem Modul (7, 8, 9, 10, 11, 12, 13) empfangen hat.

4. Verfahren nach Anspruch 1 zur Zuordnung von Adressen bei Modulen eines Systems bestehend aus wenigstens zwei RFID-Antennen, wobei eine Master-Antenne und wenigstens eine Slave-Antenne das System bilden, wobei in jeder Antenne wenigstens ein adressierbares Modul angeordnet ist, derart, dass das System insgesamt wenigstens zwei Module aufweist, wobei jedes Modul einen RF-Detektor aufweist, wobei die Master-Antenne einen RFID-Reader und wenigstens einen Multiplexer aufweist,
**dadurch gekennzeichnet,**
a) **dass** vom Reader (31) eine Antenne (2, 3, 4, 5, 6) angesteuert wird, so dass ein Feld dieser Antenne (2, 3, 4, 5, 6) eingeschaltet wird,
b) **dass** eine Nachricht (29) vom Reader (31) mit Angabe der zu übernehmenden Adresse über eine Datenleitung (18) an alle Antennen (2, 3, 4, 5, 6) gesendet wird,
c) **dass** die zu adressierenden Module (7, 8, 9, 10, 11, 12, 13) die von der Antenne (2, 3, 4, 5, 6) erzeugte Spannung mit den RF-Detektoren (27, 28) messen und diesen Spannungswert zu der gesendeten Adresse speichern,
d) **dass** die Schritte a) bis c) für jede Antenne (2, 3, 4, 5, 6) wiederholt werden,
e) **dass** eine Nachricht an sämtliche Antennen (2, 3, 4, 5, 6) gesendet wird, so dass jedes adressierbare Modul (7, 8, 9, 10, 11, 12, 13) die Adresse übernimmt, die jeweils der größten am RF-Detektor (27, 28) dieses Modules (7, 8, 9, 10, 11, 12, 13) gemessenen Spannung zugeordnet wurde.

5. Verfahren nach Anspruch 1 oder 4, **dadurch gekennzeichnet, dass** jedes adressierbare Modul (7, 8, 9, 10, 11, 12, 13) nach dem Konfigurieren mit seiner Adresse vom Reader (31) angesprochen wird.

6. Verfahren nach Anspruch 1 oder 4, **dadurch gekennzeichnet, dass** bei wenigstens zwei unterschiedlichen Modulen (7, 8, 9, 10, 11, 12, 13) in einer Antenne (2, 3, 4, 5, 6) jedes Modul (7, 8, 9, 10, 11, 12, 13) eine andere Adresse oder eine andere Kennung im Adressbereich erhält.

7. Verfahren nach einem der vorhergehenden Ansprüche, **dadurch gekennzeichnet, dass** die Adresse eine Busadresse ist.

8. Verfahren nach einem der vorhergehenden Ansprüche, **dadurch gekennzeichnet, dass** sämtliche Antennen (2, 3, 4, 5, 6) und/oder adressierbaren Module (7, 8, 9, 10, 11, 12, 13) über eine Busleitung (18) miteinander verbunden sind.

9. Verfahren nach einem der vorhergehenden Ansprüche, **dadurch gekennzeichnet, dass** als Module (7, 8, 9, 10, 11, 12, 13) LED-Module (7, 8, 9, 10, 11) und/oder Personenzähler-Module (12, 13) und/oder Display-Module verwendet werden.

10. Gate-Antennenanordnung bestehend aus wenigstens zwei RFID-Antennen, wobei jede RFID-Antenne wenigstens ein Modul aufweist, derart, dass das System insgesamt wenigstens zwei Module aufweist, wobei eine Antenne als Master-Antenne und wenigstens eine Antenne als Slave-Antenne ausgebildet ist, wobei die Master-Antenne einen RFID-Reader und wenigstens einen Multiplexer aufweist,
**dadurch gekennzeichnet, dass** in jeder Antenne (2, 3, 4, 5, 6) wenigstens ein adressierbares Modul (7, 8, 9, 10, 11, 12, 13) angeordnet ist, und dass jedes adressierbare Modul (7, 8, 9, 10, 11, 12, 13) einen RF-Detektor (27, 28) aufweist, und dass die RF-Detektoren (27, 28) als die von den Antennen (3, 4, 5, 6), insbesondere den Slave-Antennen abgestrahlten Felder erfassende und eine Spannung messende RF-Detektoren (27, 28) ausgebildet sind.

11. Gate-Antennenanordnung nach Anspruch 10, **dadurch gekennzeichnet, dass** das adressierbare Modul (7, 8, 9, 10, 11, 12, 13) als LED-Modul (7, 8, 9, 10, 11) oder Personenzähler-Modul (12, 13) oder Display-Modul ausgebildet ist.

12. Gate-Antennenanordnung nach einem der Ansprüche 10 oder 11, **dadurch gekennzeichnet, dass** eine Datenübertragungsleitung (18) zwischen sämtlichen Modulen (7, 8, 9, 10, 11, 12, 13) der Antenne (2, 3, 4, 5, 6) und dem Reader (31) der Master-Antenne (2) vorgesehen ist.

13. Gate-Antennenanordnung nach Anspruch 11, **dadurch gekennzeichnet, dass** das Personenzähler-Modul (12, 13) wenigstens ein Radarmodul aufweist.

## Claims

1. Method for assigning addresses in modules of a system consisting of at least two RFID antennae, wherein a master antenna and at least one slave antenna form the system, wherein the antennae each comprise at least one antenna loop, which represents an inductance and is formed from one or more windings and which further comprises an adapter circuit, wherein at least one addressable module is arranged in each antenna, in such a way that the system comprises at least two modules in total, wherein each module comprises an RF detector, wherein the master antenna comprises an RFID reader and at least one multiplexer, and wherein the antennae (2, 3, 4, 5, 6) are addressed progressively by means of the multiplexer,
**characterised in that**
a) one of the antennae (2, 3, 4, 5, 6) is actuated by the reader (31) such that a field of the antenna (2, 3, 4, 5, 6) is switched on,
b) **in that** a message (29) stating the address to be applied is sent to all the addressable modules (7, 8, 9, 10, 11, 12, 13) via a data line (18),
c) **in that** a voltage is measured by the RF detectors (27, 28) of all the addressable modules (7, 8, 9, 10, 11, 12, 13),
d) **in that** the address is stored in the module (7, 8, 9, 10, 11, 12, 13) to be addressed that records a voltage above a predetermined threshold,
e) **in that** steps a) to d) are repeated for each antenna (2, 3, 4, 5, 6).

2. Method according to claim 1, **characterised in that** a module (7, 8, 9, 10, 11, 12, 13) to be addressed sends a message (30) back to the reader (31) when an address has been stored **in that** module (7, 8, 9, 10, 11, 12, 13).

3. Method according to claim 2, **characterised in that** the configuration is terminated when the reader (31) has received a message (30) from a module (7, 8, 9, 10, 11, 12, 13) in response to every message (29) sent.

4. Method according to claim 1 for assigning addresses in modules of a system consisting of at least two RFID antennae, wherein a master antenna and at least one slave antenna form the system, wherein at least one addressable module is arranged in each antenna, in such a way that the system comprises at least two modules in total, wherein each module comprises an RF detector, wherein the master antenna comprises an RFID reader and at least one multiplexer,
**characterised in that**
a) an antenna (2, 3, 4, 5, 6) is actuated by the reader (31) such that a field of that antenna (2, 3, 4, 5, 6) is switched on,
b) **in that** a message (29) stating the address to be applied is sent by the reader (31) to all the antennae (2, 3, 4, 5, 6) via a data line (18),
c) **in that**, by means of the RF detectors (27, 28), the modules (7, 8, 9, 10, 11, 12, 13) to be addressed measure the voltage generated by the antenna (2, 3, 4, 5, 6) and store that voltage value to the sent address,
d) **in that** steps a) to c) are repeated for each antenna (2, 3, 4, 5, 6),
e) **in that** a message is sent to all the antennae (2, 3, 4, 5, 6) such that each addressable module (7, 8, 9, 10, 11, 12, 13) applies the address that has been respectively assigned to the highest voltage measured at the RF detector (27, 28) of that module (7, 8, 9, 10, 11, 12, 13).

5. Method according to either claim 1 or claim 4, **characterised in that**, after the configuration, each addressable module (7, 8, 9, 10, 11, 12, 13) is addressed by the reader (31) by means of the address of that module.

6. Method according to either claim 1 or claim 4, **characterised in that**, if there are at least two different modules (7, 8, 9, 10, 11, 12, 13) in one antenna (2, 3, 4, 5, 6), each module (7, 8, 9, 10, 11, 12, 13) receives a different address or a different identifier in the address range.

7. Method according to any of the preceding claims, **characterised in that** the address is a bus address.

8. Method according to any of the preceding claims, **characterised in that** all the antennae (2, 3, 4, 5, 6) and/or addressable modules (7, 8, 9, 10, 11, 12, 13) are interconnected by means of a bus line (18).

9. Method according to any of the preceding claims, **characterised in that** LED modules (7, 8, 9, 10, 11) and/or people-counter modules (12, 13) and/or display modules are used as modules (7, 8, 9, 10, 11, 12, 13).

10. Gate antenna arrangement consisting of at least two RFID antennae, wherein each RFID antenna comprises at least one module, in such a way that the system comprises at least two modules in total, wherein one antenna is formed as a master antenna and at least one antenna is formed as a slave antenna, wherein the master antenna comprises an RFID reader and at least one multiplexer,
**characterised in that**
at least one addressable module (7, 8, 9, 10, 11, 12, 13) is arranged in each antenna (2, 3, 4, 5, 6), and **in that** each addressable module (7, 8, 9, 10, 11, 12, 13) comprises an RF detector (27, 28), and **in that** the RF detectors (27, 28) are formed as RF detectors (27, 28) that record the fields emitted by the antennae (3, 4, 5, 6), in particular by the slave antennae, and measure a voltage.

11. Gate antenna arrangement according to claim 10, **characterised in that** the addressable module (7, 8, 9, 10, 11, 12, 13) is formed as an LED module (7, 8, 9, 10, 11), as a people-counter module (12, 13) or as a display module.

12. Gate antenna arrangement according to any of claims 10 or 11, **characterised in that** a data transmission line (18) is provided between all the modules (7, 8, 9, 10, 11, 12, 13) of the antenna (2, 3, 4, 5, 6) and the reader (31) of the master antenna (2).

13. Gate antenna arrangement according to claim 11, **characterised in that** the people-counter module (12, 13) comprises at least one radar module.

## Revendications

1. Procédé d'attribution d'adresses dans les modules d'un système constitué d'au moins deux antennes RFID, une antenne maître et au moins une antenne esclave formant le système, les antennes ayant chacune au moins une boucle d'antenne qui représente une inductance et qui est constitué d'un ou de plusieurs spires, qui présente également un circuit d'adaptation, dans lequel au moins un module adressable est agencé dans chaque antenne, de sorte que le système présente un total d'au moins deux modules, chaque module présentant un détecteur RF, l'antenne maître un présentant un lecteur RFID et au moins un multiplexeur, et les antennes (2, 3, 4, 5, 6) étant adressés progressivement via le multiplexeur,
**caractérisé en ce que**
a) l'une des antennes (2, 3, 4, 5, 6) est commandé par le lecteur (31) pour qu'un champ de l'antenne (2, 3, 4, 5, 6) soit allumé,
b) un message (29) précisant l'adresse à prendre en charge est envoyé via une ligne de données (18) à tous les modules adressables (7, 8, 9, 10, 11, 12, 13),
c) avec les détecteurs RF (27, 28) de tous les modules adressables (7, 8, 9, 10, 11, 12, 13) une tension est mesurée,
d) l'adresse est stockée dans le module (7, 8, 9, 10, 11, 12, 13) à adresser, qui détecte une tension supérieure à un seuil prédéterminé,
e) les étapes a) à d) sont répétées pour chaque antenne (2, 3, 4, 5, 6).

2. Procédé selon la revendication 1, **caractérisé en ce qu'**un module à adresser (7, 8, 9, 10, 11, 12, 13) renvoie un message (30) au lecteur (31) lorsqu'une adresse dans ce module (7, 8, 9, 10, 11, 12, 13) a été enregistrée.

3. Procédé selon la revendication 2, **caractérisé en ce que** la configuration est terminée lorsque, pour chaque message (29) envoyé, le lecteur (31) a reçu un message (30) d'un module (7, 8, 9, 10, 11, 12, 13).

4. Procédé selon la revendication 1 pour attribuer des adresses dans des modules d'un système constitué d'au moins deux antennes RFID, une antenne maître et au moins une antenne esclave formant le système, au moins un module adressable étant disposé dans chaque antenne, de tel sorte que le système comporte au moins deux modules au total, chaque module ayant un détecteur RF, l'antenne maître ayant un lecteur RFID et au moins un multiplexeur,
**caractérisé en ce que**
a) une antenne (2, 3, 4, 5, 6) est commandée par le lecteur (31) pour qu'un champ de cette antenne (2, 3, 4, 5, 6) soit activé,
b) un message (29) précisant l'adresse à prendre en charge est envoyé via une ligne de données (18) à tous les antennes (2, 3, 4, 5, 6),
c) les modules (7, 8, 9, 10, 11, 12, 13) à adresser mesurent la tension générée par l'antenne (2, 3, 4, 5, 6) avec les détecteurs RF (27, 28) et stockent cette valeur de tension au niveau de l'adresse envoyé,
d) les étapes a) à c) sont répétées pour chaque antenne (2, 3, 4, 5, 6),
e) un message est envoyé à toutes les antennes (2, 3, 4, 5, 6), de sorte que chaque module adressable (7, 8, 9, 10, 11, 12, 13) reprend l'adresse qui est associé à la tension la plus grande mesurée au niveau du détecteur RF (27, 28) de ce module (7, 8, 9, 10, 11, 12, 13).

5. Procédé selon la revendication 1 ou 4, **caractérisé en ce que** chaque module adressable (7, 8, 9, 10, 11, 12, 13), après configuration, est adressé par le lecteur (31) avec son adresse.

6. Procédé selon la revendication 1 ou 4, **caractérisé en ce qu'**avec au moins deux modules différents (7, 8, 9, 10, 11, 12, 13) dans une antenne (2, 3, 4, 5, 6), chaque module (7, 8, 9, 10, 11, 12, 13) reçoit une adresse différente ou un identifiant différent dans la plage d'adresses.

7. Procédé selon l'une quelconque des revendications précédentes, **caractérisé en ce que** l'adresse est une adresse de bus.

8. Procédé selon l'une quelconque des revendications précédentes, **caractérisé en ce que** toutes les antennes (2, 3, 4, 5, 6) et/ou modules adressables (7, 8, 9, 10, 11, 12, 13) sont connectés les uns aux autres via une ligne de bus (18).

9. Procédé selon l'une quelconque des revendications précédentes, **caractérisé en ce que** comme modules (7, 8, 9, 10, 11, 12, 13), des modules LED (7, 8, 9, 10, 11) et/ ou des modules de compteur de personnes (12, 13) et/ou des modules d'affichage sont utilisés.

10. Agencement d'antenne de portique comprenant au moins deux antennes RFID, chaque antenne RFID ayant au moins un module, de sorte que le système comporte au total au moins deux modules, une antenne étant conçue comme antenne maître et au moins une antenne comme antenne esclave dans lequel l'antenne maître comporte un lecteur RFID et au moins un multiplexeur,
**caractérisé en ce que**
dans chaque antenne (2, 3, 4, 5, 6) au moins un module adressable (7, 8, 9, 10, 11, 12, 13) est agencé, et que chaque module adressable (7, 8, 9, 10, 11, 12, 13) présente un détecteur RF (27, 28), et que les détecteurs RF (27, 28) sont réalisés sous forme de détecteurs RF (27, 28) qui détectent les champs émis par les antennes (3, 4, 5, 6), en particulier les antennes esclaves, et mesurent une tension.

11. Agencement d'antenne de porte selon la revendication 10, **caractérisé en ce que** le module adressable (7, 8, 9, 10, 11, 12, 13) est réalisé sous forme de module LED (7, 8, 9, 10, 11) ou de module de comptage de personnes (12, 13) ou de module d'affichage.

12. Agencement d'antenne de portique selon l'une des revendications 10 ou 11, **caractérisé en ce qu'**une ligne de transmission de données (18) est prévue entre tous les modules (7, 8, 9, 10, 11, 12, 13) des antennes (2, 3, 4, 5, 6) et le lecteur (31) de l'antenne maître (2).

13. Agencement d'antenne de portique selon la revendication 11, **caractérisé en ce que** le module de compteur de personnes (12, 13) comporte au moins un module radar.
